# DEMANDE DE BREVET EUROPEEN

(11) **EP 1 085 448 A1**
(43) Date de publication de la demande: **21.03.2001**
(21) Numéro de dépôt: 00402463.4
(22) Date de dépôt: 07.09.2000
(51) Int. Cl.: G06F 19/00, G06F 15/16, G06F 12/08, G06F 9/46, G06F 11/32, G06F 15/177

(54) **Système d'administration pour machines multimodulaires multiprocesseurs**

(30) Priorité: 16.09.1999 FR 9911597
(71) Demandeur: BULL S.A., 78430 Louveciennes (FR)
(72) Inventeur: Caudrelier, Christian, 38640 Claix (FR); Olivares, Lorenzo, 20010 Vittuone (MI) (IT); Reix, Tony, 38130 Echirolles (FR)
(74) Mandataire: Colombe, Michel

(57) **Abrégé**

La présente invention concerne un système d'administration globale d'une machine multimodulaire multiprocesseur (PK). Le système est caractérisé en ce qu'il comporte un module indépendant (SM) dédié à l'administration globale des modules (M1 à Mn), le module indépendant (SM) étant couplé d'une part, à chaque moyen d'administration (BUMP) des modules (M1 à Mn) par une première liaison spécifique supportant un protocole de communication déterminé permettant de gérer chaque module au démarrage de la machine, pendant le fonctionnement de la machine et après arrêt du fonctionnement de la machine, le module indépendant (SM) étant couplé d'autre part, à chaque module via une deuxième liaison, et le module indépendant étant par ailleurs couplé globalement à la machine multimodulaire (PK) via un lien physique de type réseau (LAN) relié à au moins deux modules (M2 et M3).

## Description

La présente invention se rapporte au domaine de l'administration de machines informatiques, notamment de machines multimodulaires de type NUMA, abréviation anglo-saxonne pour "Non Uniform Memory Access", et concerne plus particulièrement un système d'administration, indépendant, permettant la gestion de la disponibilité de la machine dans les différentes phaseS de son fonctionnement, en fonction de l'état de fonctionnement de ses modules multiprocesseurs.

Une architecture multimodulaire est composée de plusieurs entités physiques distinctes qui sont reliées les unes aux autres par un lien rapide intervenant au niveau du bus système, généralement de type SCI, abréviations anglo-saxonnes pour Scalable Coherent Interface.

Chaque entité, appelée ci-après module, est munie de moyens permettant de connecter le module au lien rapide.

La fonctionnalité d'un module peut être étendue à l'administration de machines indépendantes pour effectuer notamment une "consolidation de serveur".

Les modules possèdent généralement un moyen d'administration appelé "Service Processor" (SP), connu également sous l'appellation "BUMP", abréviation anglo-saxonne pour "Bring Up Microprocessor", et qui fonctionne comme une unité centrale indépendante, sollicitée à la mise en marche et à l'arrêt des modules, ainsi que pour effectuer la surveillance des modules.

Les contraintes liées à cette fonctionnalité peuvent être résumées comme suit :
- il faut assurer le démarrage synchrone des modules d'une machine sachant que la machine ne dispose pas d'un mécanisme physique "global" pour démarrer l'ensemble des modules ; chaque module possédant son propre mécanisme physique de démarrage (bouton poussoir ou clé) ;
- il faut modifier automatiquement la configuration de la machine en cas de défaillance d'un module ou du lien rapide et relancer le démarrage de la machine, les BUMPs des différents modules n'étant pas reliés entre eux et ne pouvant donc pas assurer cette modification ;
- enfin, il faut avoir une visibilité de l'état des différents modules au travers d'une interface graphique permettant la visualisation dynamique de l'état des différents modules.

Une solution possible consisterait à ajouter le matériel nécessaire pour obtenir la fonction marche/arrêt "globale".

Une telle solution nécessiterait la modification des modules pour qu'ils prennent en compte ce nouveau matériel, de manière "globale", sans tenir compte de leur propre matériel de marche/arrêt.

Une autre solution consisterait à interconnecter les différents BUMPs pour qu'ils puissent décider eux-mêmes des modifications de configuration. Cette solution nécessiterait l'ajout de matériel pour connecter les BUMPs. De plus, cette solution nécessiterait des développements complexes au niveau "firmware", c'est-à-dire au niveau du logiciel de programmation du BUMP, pour pouvoir gérer cette connexion, analyser les défaillances et décider des modifications de configuration à effectuer.

Il serait également possible d'utiliser un écran graphique connecté directement sur la machine. Toutefois, cette solution ne permettrait pas d'administrer la machine quand le système ne fonctionne pas, c'est-à-dire quand la machine est arrêtée et sous contrôle des BUMPs.

La présente invention propose une solution qui tenant compte des précédentes contraintes, permet notamment de pallier les inconvénients précités.

Le système selon l'invention comporte un module d'administration, indépendant, appelé "Service Master" (SM), qui est couplé à chaque BUMP, par deux liaisons asynchrones dont l'une est utilisée exclusivement pour la communication en mode de commande avec le BUMP.

L'invention met en oeuvre un protocole de communication qui permet à cette liaison asynchrone d'assurer les fonctions marche/arrêt, la configuration dynamique de la machine, et la transmission des défaillances éventuelles d'un ou plusieurs modules de la machine.

Le système selon l'invention fournit en outre une interface graphique permettant à l'utilisateur de gérer la machine en lui donnant accès aux fonctions de marche/arrêt, aux fonctions de configuration et de visualisation d'état de la machine et ce aussi bien quand la machine est en fonctionnement ou à l'arrêt.

L'utilisation d'un module d'administration indépendant permet au système selon l'invention d'offrir à l'utilisateur une interface graphique conviviale, à la fois quand la machine fonctionne et quand la machine est arrêtée. Cela permet de développer plus facilement des outils d'analyse des défaillances et de configuration automatique d'une complexité plus grande que ce qui pourrait être réalisée par le logiciel des BUMPs qui reste très limité en taille et en complexité.

A cet effet, l'invention a pour premier objet un système d'administration globale d'une machine multimodulaire multiprocesseur, comportant un nombre déterminé de modules comportant respectivement un moyen propre d'administration permettant de gérer la disponibilité du module et comportant au moins un premier port de communication et un deuxième port de communication, caractérisé en ce que le système comporte, en outre, un module indépendant dédié à l'administration globale des modules, le module indépendant étant couplé d'une part, à chaque moyen d'administration des modules via le deuxième port de communication et une première liaison spécifique supportant un protocole de communication déterminé permettant de gérer chaque module au démarrage de la machine, pendant le fonctionnement de la machine et après arrêt du fonctionnement de la machine, le module indépendant étant couplé d'autre part, au premier port de communication de chaque module via une deuxième liaison, et le module indépendant étant par ailleurs couplé globalement à la machine multimodulaire via un lien physique de type réseau relié à au moins deux modules.

D'autres avantages et caractéristiques de la présente invention apparaîtront à la lecture de la description qui suit faite en référence aux figures annexées qui représentent :
- la figure 1, l'architecture simplifiée d'un système d'administration des modules d'une machine, selon l'invention ;
- la figure 2, le système selon l'invention, dans son environnement matériel ;
- la figure 3, l'architecture de la machine multimodulaire des figures précédentes considérée sous l'aspect fonctionnel ; et
- la figure 4, les différentes fonctions mises en jeu par le module d'administration du système selon l'invention et accessibles à travers l'interface graphique du module d'administration.

La description qui suit, s'appuie sur une plate-forme AIX (AIX est le système d'exploitation "OS" d'IBM sur UNIX ) et sur l'architecture standard d'une machine multimodulaire de type NUMA.

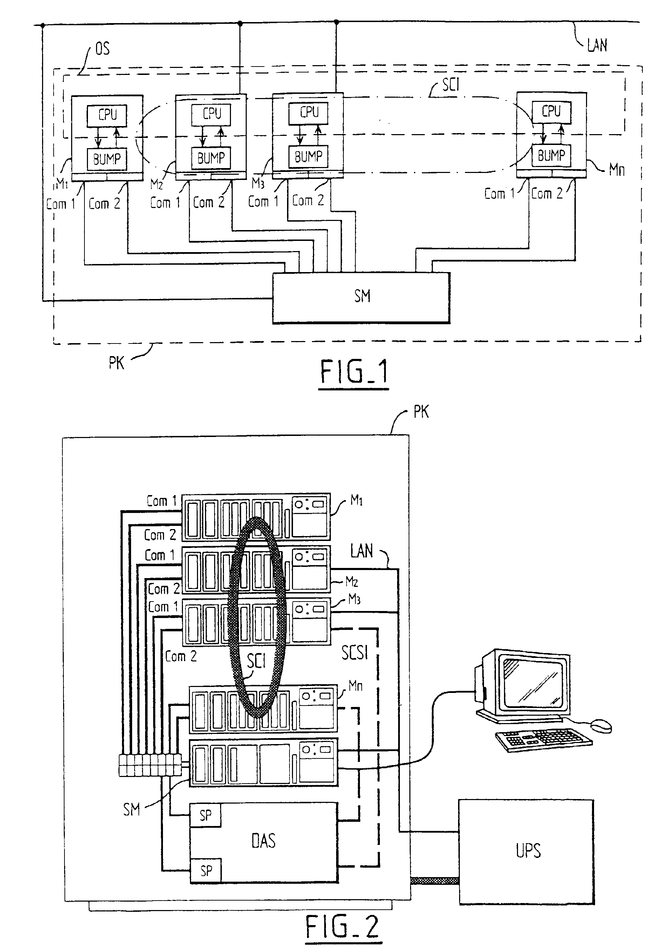

La figure 1 illustre l'architecture simplifiée d'un système d'administration selon l'invention.

Un module d'administration SM, indépendant des autres modules M1 à Mn de la machine PK, est couplé par un premier lien physique de communication au système d'exploitation de la machine, appelé ci-après OS, abréviations anglosaxonnes pour "Operating System".

Ce lien physique est, dans le mode de réalisation considéré, un réseau local privé, ci-après appelé LAN, abréviations anglo-saxonnes pour "Local Area Network".

L'OS et la machine sont délimités respectivement par une ligne fermée discontinue.

Le module d'administration est en outre couplé par une liaison spécifique via un des ports de communication des modules, à chaque moyen d'administration des modules.

Chaque module comporte deux ports de connexion série, respectivement, un premier port Com 1 et un deuxième port Com 2.

Le premier port de connexion Com 1 est réservé au fonctionnement standard de la console système de chaque module. Il permet de connecter le module d'administration SM soit à la console du BUMP quand le système est arrêté, ou en cours de démarrage, soit à la console système de l'OS quand le système fonctionne, par exemple, via des premières liaisons RS232 standard.

Le deuxième port de connexion Com 2 est réservé spécifiquement pour connecter le module d'administration SM au BUMP du module, par exemple, également via des deuxièmes liaisons RS232 standard.

Ces deuxièmes liaisons supportent les informations de commande échangées entre le module d'administration SM et le BUMP de chaque module selon un protocole de communication déterminé.

La figure 2 illustre toujours de façon schématique le système selon l'invention, dans son environnement matériel.

Elle permet de distinguer les principaux composants matériel d'une machine multimodulaire ainsi que les différentes liaisons entre le module d'administration SM et les autres composants matériel de la machine.

Le module d'administration SM est couplé :
- au BUMP de chaque module par une liaison RS232 connectée au port Com 2 du module ;
- à la sortie console du système d'exploitation de la machine par un nombre déterminé de liaisons RS232, reliant respectivement le module d'administration au port Com 1 de chaque module ;
- au système d'exploitation par un LAN, privé pour des raisons de sécurité. Ce LAN est connecté dans cette configuration à un premier et un deuxième modules distincts, mais seulement une des deux connexions est utilisée à la fois ; l'autre connexion étant utilisée en cas de défaillance du premier module ou du module avec lequel il est connecté.
- à un bloc d'alimentation de secours UPS via le LAN pour contrôler et commander le bloc d'alimentation ;
- au sous-système de stockage, par exemple un DAS, abréviations anglo-saxonnes pour "Disk Array System" via deux liaisons RS232 afin de dialoguer avec les processeurs de gestion du sous-système de stockage quand les liaisons supportant les données (SCSI : abréviations anglo-saxonnes pour Small Computer System Interface, ou fibre) ne sont pas encore configurées. Les DAS sont un exemple de sous-systèmes qui sont initialisées par une liaison RS232 ; et
- à un terminal de visualisation externe qui via une interface graphique permet de visualiser, en temps réel, l'état global des modules sous la forme d'une fenêtre "active" et interactive.

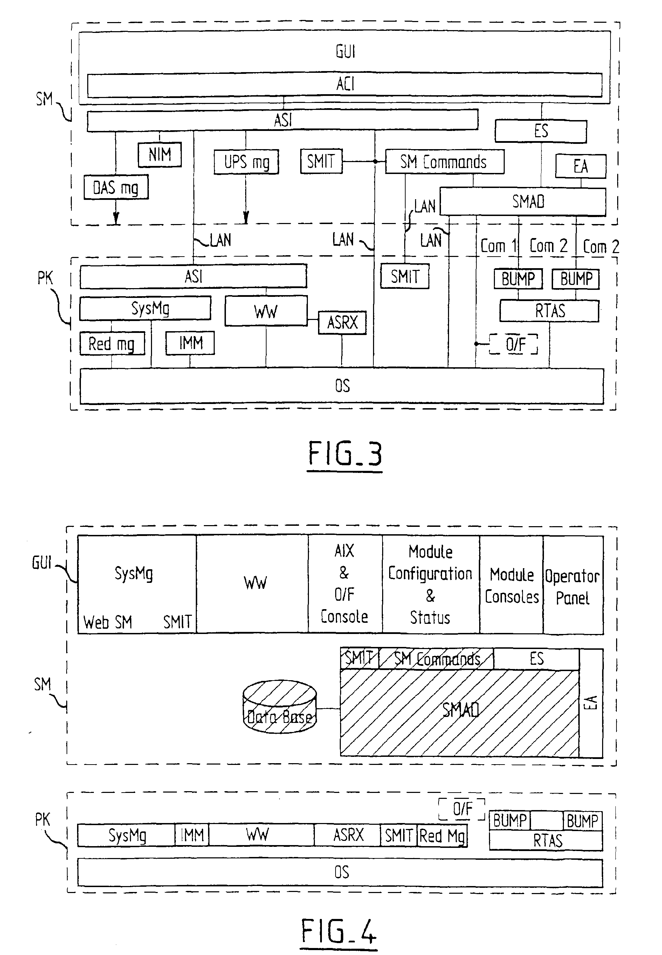

La figure 3 illustre schématiquement, l'architecture de la machine multimodulaire des figures précédentes considérée sous l'aspect fonctionnel.

Les différentes fonctions, représentées sous forme de blocs fonctionnels, sont regroupées en deux ensembles, délimités respectivement par une ligne fermée discontinue, représentatifs de la machine PK et du module d'administration SM.

Le module d'administration SM comporte une interface graphique GUI comportant elle-même un module administrateur Client ACI pour l'application Client/Serveur.

L'interface graphique GUI est couplée par l'intermédiaire de l'interface administrateur Client ACI à un module administrateur Serveur et, via un serveur d'événements ES, à un "démon" SMAD appartenant à un agent d'administration SMA non représenté. (Un démon est un processus ou tâche en sommeil qui se réveille quand survient un événement déterminé)

L'interface administrateur Serveur ASI est couplée aux blocs fonctionnels suivants :
- un bloc, DAS mg, de gestion de sous-système de stokage DAS ;
- un bloc, NIM, de gestion d'installation réseau ;
- un bloc, UPS mg, de gestion de l'alimentation de secours UPS ;
- un bloc, SMIT, qui est un outil de gestion d'interface système ;
- un bloc, SM commands, regroupant les différentes commandes émises vers la machine.

L'interface administrateur Serveur ASI du module d'administration SM est également directement couplée à l'interface Serveur ASI de la machine PK via le LAN.

Le bloc, SM commands, est couplé d'une part, via le LAN, au bloc SMIT de la machine PK et est lui-même couplé à l'OS de la machine et, d'autre part, au bloc SMAD.

Le bloc SMAD est directement couplé, via le LAN et via le port de connexion Com 1 du module principal à l'OS de la machine.

Il est couplé en outre aux BUMPs des modules, via leurs ports de communication respectifs Com 2.

L'interface Serveur ASI de la machine est couplée à l'OS via un bloc SysMg de gestion de l'OS.

Ce bloc de gestion SysMg est d'autre part couplé à l'OS, via un bloc, RedMg, de gestion de redondance et via un bloc, IMM, de gestion de disques "miroirs" internes. Ce bloc SysMg peut être également intégré dans l'interface Serveur ASI de la machine PK en tant qu'application

L'interface Serveur ASI de la machine PK est encore couplée à l'OS via un bloc WW correspondant à une application conviviale permettant à l'utilisateur d'avoir une vision interne de la machine. Ce bloc WW peut être également intégré dans l'interface Serveur ASI de la machine PK.

Il est également couplé à un bloc ASRX qui collecte et rapporte des informations sur l'activité de l'OS et qui est lui-même couplé à l'OS.

Les BUMPs des modules sont couplés à l'OS via un bloc RTAS qui sert d'interface programmable entre les BUMPs et l'OS.

Enfin, un bloc O/F, représenté par une ligne fermée discontinue, est couplé sur la liaison reliant le bloc SMAD et l'OS. Ce bloc O/F n'est présent et actif que pendant une des phases du démarrage du système.

Dans cette architecture, l'interface graphique GUI du module d'administration SM est capable de gérer dans une même fenêtre, des objets provenant à la fois du module d'administration SM et de la machine PK.

La figure 4, à considérer en parallèle avec l'architecture de la figure 3, illustre les différentes fonctions mises en jeu par le module d'administration SM du système selon l'invention et accessibles à travers l'interface graphique GUI du module d'administration SM.

Ces différentes fonctions sont listées ci-dessous :
- la fonction "Operator Panel" ;
- la fonction "Module Consoles" ;
- la fonction "Module Configuration & Status" ;
- la fonction "AIX & O/F Console" ;
- la fonction "WW" ; et
- la fonction "System Management".

Ces différentes fonctions sont décrites ci-après en détail.

La fonction "Operator Panel" se présente sous la forme d'un panneau de contrôle, et se décline elle-même en plusieurs sous-fonctions consistant à :
- donner l'état marche/arrêt ;
- agir comme un interrupteur marche/arrêt effectuant :
   - la mise sous tension du système d'exploitation (tous les modules disponibles) en utilisant un programme de chargement initial rapide ou normal ;
   - la mise hors tension du système d'exploitation (suite à une commande UNIX d'arrêt système ou l'arrêt de alimentation);
   - le redémarrage du système (suite à une commande UNIX d'arrêt système et réamorçage, un réamorçage, réinitialisation logicielle ou matérielle) ;
- donner l'état du système (arrêté, en cours de réamorçage, en cours d'exécution ; en cours d'arrêt, en défaut) ;
- donner la position physique de la clé (normal/service) ;
- donner une visualisation graphique des valeurs affichées sur l'afficheur numérique du module principal c'est-à-dire l'afficheur numérique du système.

Les fonctions d'arrêt système et de réamorçage sont toutes les deux réalisées par des commandes d'arrêt système et de réamorçage lancées à partir du système d'exploitation de la machine via le LAN tandis que les autres fonctions sont réalisées en utilisant un protocole déterminé à travers des liaisons RS232 connectées à chaque BUMP comme décrit précédemment.

La fonction "Module Consoles" est utilisée à chaque fois qu'un utilisateur veut ouvrir une console virtuelle sur la liaison RS232 connectée au port de communication COM 1 d'un module. Cette fonction est activée à partir de l'écran de configuration de ce module.

Le type de console dépend de l'état du module à l'ouverture de la fenêtre :
- quand le module est en attente (stand-by) ou en défaut (faulty), la console donne accès au menu stand-by du BUMP ;
- quand le module est indisponible (disabled), la console est alors équivalente à un terminal alphanumérique connecté au port de communication Com 1 du module ;
- quand le module n'est pas dans un des états suivants : mode en attente, en défaut ou indisponible, la console se comporte alors comme une simple fenêtre de visualisation sans interaction possible à partir du clavier de la console.

Une console d'un module change automatiquement d'état , entre le mode "interactif" et le mode "visualisation", quand le module est en mode "attente" et quand l'utilisateur démarre le système.

Quand une console est dans le mode "visualisation", elle ne peut pas changer d'état sans être fermée pour en ouvrir une nouvelle.

La fonction "Module Configuration & Status" se décline elle-même en plusieurs sous-fonctions :
- visualisation des modules dans leur environnement matériel ;
- état de chaque module (disponible, indisponible ou en défaut) ;
- propriétés du module :
   - état détaillé :
      - disponible (en attente, en amorçage, en exécution) ;
      - indisponible (connecté, déconnecté) ;
      - en défaut (causes si elles existent).
   - action pour un nouvel amorçage (disponible, indisponible) ;
- accès à la console du module (la fenêtre est affichée sur le terminal de visualisation).

L'état d'un module est la combinaison du résultat de l'action de l'utilisateur (disponible ou indisponible), de la valeur retournée par un BUMP (en attente, en exécution ou en défaut) et du résultat du test de la liaison (connectée ou déconnectée).

La fonction "AIX & O/F Console" est activée à chaque fois que l'utilisateur veut ouvrir une console "virtuelle" (une fenêtre d'émulation d'un terminal) sur la liaison RS232 connectée au port de communication Com 1 du module principal.

Cette console correspond à la console de l'OS quand l'OS est en cours d'exécution, ou à la console de l'interface programmable O/F "Open Firmware" quand le bloc O/F est en cours d'exécution.

Cette fonction est la seule qui peut activée pour des opérations spéciales telles que :
- dépannage du noyau ;
- installation de l'OS ;
- opération de maintenance de l'OS (amorçage en mode Service) ;
- visualisation de l'initialisation de l'OS ;
- opérations de l'interface programmable O/F.

La fonction du bloc WW est matérialisée par une icône identifiant l'état affiché par la page d'états de l'OS, par exemple en utilisant trois couleurs différentes : rouge, jaune et vert.

L'icône est "rouge" si au moins un état de la page est "rouge", l'icône est "jaune" si au moins un état de la page est "jaune" et s'il n'y a pas d'état "rouge".

Autrement, l'icône est "verte".

La fonction "System Management" est matérialisée par une première icône "WebSM" qui donne accès aux applications Client/Serveur de la machine.

Elle est matérialisée par une deuxième icône "SMIT" qui donne accès aux menus de la fonction SMIT. Cette fonction est un outil qui fait partie de l'OS et qui permet de créer une interface entre l'OS et un menu accessible par l'utilisateur et qui autorise ou non le dialogue entre l'utilisateur et l'OS.

La description qui suit détaille les différentes fonctions réalisées par l'agent d'administration SMA.

Ces différentes fonctions sont listées ci-dessous :
- interface de commande (via un "socket" dédié à la communication des commandes ; un "socket", en terminologie anglo-saxonne, définit une interface de programmation d'applications) ;
- interface d'événements Serveur (via un "socket" dédié à l'envoi des événements asynchrones) ;
- configuration de module automatique (élection du module principal et table de configuration matérielle) ;
- surveillance de l'amorçage (pour la mise-à-jour de l'état du module pendant les différentes phases de l'amorçage) ;
- capture des erreurs en provenance du module défaillant (pour récupérer des informations sur le module défaillant et redémarrer l'amorçage sans ce module).

L'agent SMA comporte quatre blocs fonctionnels principaux, hachurés sur la figure 4, qui sont détaillés ci-après.

Le premier bloc SMAD est un "démon" chargé de répondre à des requêtes émanant de l'interface graphique GUI via les commandes du module d'administration SM.

Il assure la mise-à-jour de la table d'état des modules de la machine. Il est responsable du dialogue avec le BUMP de chaque module pour fournir la table d'état et pour réaliser des fonctionnalités telles que "Operator Panel", " Module Consoles ", "Module Configuration & Status" en utilisant un protocole déterminé entre le module d'administration et le BUMP, protocole qui sera décrit ultérieurement.

Il assure également la fonction de surveillance de l'amorçage incluant la capture des erreurs en provenance du module défaillant et le redémarrage de l'amorçage.

Il lance l'analyseur d'erreur dans le cas d'un "crash" de l'OS et en fonction du résultat, réalise la désactivation du composant défaillant (processeur, mémoire ou module) en envoyant une commande déterminée au BUMP correspondant.

Il est également en charge de la configuration de la liaison avec la console "AIX & O/F".

Il est capable d'émettre des commandes spécifique vers l'OS via le LAN.

Le deuxième bloc "Data Base" est une base de données qui contient un fichier répertoriant toutes les machines gérées par le module d'administration SM.

Il contient également les fichiers de connexion (erreur et historique) qui sont sauvegardés périodiquement dans un fichier du module d'administration SM.

Des commandes de mise-à-jour de la base de données sont obligatoires pour éliminer des incohérences entre le résultat des commandes en interface avec les "démons" et le résultat des commandes qui recherchent des informations directement dans les fichiers de configuration. Ces commandes sont nécessaires pour créer automatiquement les "démons" système et les commandes associées. Quand les fichiers de configuration sont modifiés, la précédente configuration est conservée comme configuration de sauvegarde jusqu'à ce qu'une nouvelle configuration soit validée.

Le troisième bloc, SM commands, regroupe les commandes utilisées par l'interface graphique GUI.

Il y a deux types de commandes :
- les commandes qui récupèrent les informations de la base de données Data Base ; et
- les commandes qui émettent une requête vers l'agent d'administration SMAD concerné.

La commande d'arrêt ou de réamorçage de l'OS de la machine émet également une telle requête vers l'agent d'administration SMAD qui est en charge d'émettre la commande appropriée vers la machine via le LAN.

Le quatrième bloc SMIT, décrit précédemment, regroupe les fonctions suivantes :
- panneau de contrôle (operator panel) ;
- configuration "module & status" incluant le journal des connexions et un historique ;
- consoles "module"
- console "AIX & O/F" ;
- accès au SMIT de la plate-forme via le LAN ; et
- gestion du DAS.

Ces fonctions sont hébergées par le bloc SM commands.

Le bloc EA est un analyseur d'erreur qui est chargé de l'analyse des différents types d'erreurs susceptibles de se produire dans la machine.

Il est appelé automatiquement par la fonction de capture des erreurs en provenance du module défaillant de l'agent SMAD, citée précédemment dans la description de l'agent, et analyse les informations reçues de l'agent SMAD après un "crash" de l'OS pour déterminer le composant défaillant.

Le résultat de l'analyse est ensuite enregistré dans un fichier déterminé du bloc et exploité par l'agent SMAD pour désactiver le composant détecté comme défaillant par le bloc EA.

Le bloc ES se comporte comme une passerelle entre le SMAD (appelé "Source"), qui émet des événements, et l'interface graphique GUI (appelée "Client") qui reçoit les événements.

Le format logique du protocole utilisé pour les échanges entre un BUMP et le module d'administration SM est donné ci-après :

Les messages envoyés par un BUMP à destination du module d'administration SM doivent respecter le format logique suivant :
<début du message>CTRL_(0x1F)<type du message>CTRL_<message >CTRL_<fin du message >\n \r avec :
<début du message > 1 caractère (STX = "CTRL B")
< type du message > <caractère><numéro du type>
<caractère> 1 caractère, # pour un message d'information, > pour la réponse
<numéro du type> code du message
<message> contenu du message ou de la réponse
<fin du message> 1 caractère (ETX = "CTRL C")

Les commandes émises par le module d'administration SM doivent respecter le format suivant :
<début de la commande >CTRL_ <type de commande>CTRL_<paramètre>CTRL_<fin de la commande>\n \r avec :
<début de la commande > 1 caractère (STX = "CTRL B")
<type de la commande> <caractère><code de la commande>
<caractère> 1 caractère S pour "Set", G pour "Get"
<code de la commande> numéro d'identification de la commande
<paramètres> paramètres relatifs au code de la commande
<fin de la commande> 1 caractère (ETX = "CTRL C")

## Revendications

1. Système d'administration globale d'une machine multimodulaire multiprocesseur (PK), comportant un nombre déterminé de modules (M1 à Mn) comportant respectivement un moyen propre d'administration permettant de gérer la disponibilité du module et comportant au moins un premier port de communication (Com1) et un deuxième port de communication (Com 2), caractérisé en ce que le système comporte, en outre, un module indépendant (SM) dédié à l'administration globale des modules (M1 à Mn), le module indépendant (SM) étant couplé d'une part, à chaque moyen d'administration (BUMP) des modules (M1 à Mn) via le deuxième port de communication (Com 2) et une première liaison spécifique supportant un protocole de communication déterminé permettant de gérer chaque module au démarrage de la machine, pendant le fonctionnement de la machine et après arrêt du fonctionnement de la machine, le module indépendant (SM) étant couplé d'autre part, au premier port de communication (Com 1 ) de chaque module via une deuxième liaison, et le module indépendant étant par ailleurs couplé globalement à la machine multimodulaire (PK) via un lien physique de type réseau (LAN) relié à au moins deux modules (M2 et M3).

2. Système selon la revendication 1, caractérisé en ce qu'il comporte en outre une interface graphique (GUI) couplée au module d'administration (SM) et à chaque module (M1 à Mn) permettant à l'utilisateur, d'une part, de surveiller, en temps réel, l'état global des modules de la machine, et d'autre part, d'interagir sur le fonctionnement de la machine.

3. Système selon la revendication 2, caractérisé en ce que l'interface graphique (GUI) est matérialisée sur l'écran d'un terminal de visualisation, couplé au module d'administration (SM), sous forme de fenêtres actives et interactives ; chaque fenêtre étant représentative de l'état d'un module.

4. Système selon la revendication 1, caractérisé en ce que le module d'administration (SM) comporte :
- une interface graphique (GUI) comportant un module administrateur Client (ACI) destiné aux applications Client/Serveur ;
- un module administrateur Serveur (ASI) couplé au module administrateur Client (ACI) ;
- un bloc de commandes (SM Commands), regroupant les différentes commandes émises vers la machine, couplé au module administrateur Serveur (ASI) ;
- un serveur d'événements (ES) couplé à l'interface graphique (GUI) ;
- un démon (SMAD) couplé au serveur d'événements (ES) et au bloc de commandes (SM Commands) ;
- un bloc (EA) analyseur d'erreurs couplé au démon (SMAD) ;
- un bloc (NIM) de gestion d'installation réseau couplé au module administrateur Serveur (ASI) ; et
- un bloc (SMIT) de gestion d'interface système couplé au module administrateur Serveur (ASI) et au bloc de commandes (SM Commands).

5. Système selon la revendication 4, caractérisé en ce qu'il comporte en outre, un bloc (DASmg) de gestion d'un sous-système de stockage (DAS) de la machine (PK), couplé au module administrateur Serveur (ASI) et un bloc (UPSmg) de gestion d'une alimentation de secours de la machine, couplé au module administrateur Serveur (ASI).

6. Système selon l'une quelconque des revendications 4 à 5, caractérisé en ce que la machine (PK) comporte :
- un système d'exploitation (OS) ;
- une interface administrateur Serveur (ASI) couplée à l'interface administrateur Serveur (ASI) du module d'administration (SM) via le réseau local privé (LAN) ;
- un bloc (SysMg) de gestion du système d'exploitation (OS) couplé entre le système d'exploitation (OS) et l'interface Serveur (ASI) de la machine (PK) ;
- un bloc (RedMg) de gestion de redondance couplé entre le système d'exploitation (OS) et le bloc (SysMg) de gestion du système d'exploitation (OS) ;
- un bloc (IMM) de gestion de mémoires "miroir" internes, couplé entre le système d'exploitation (OS) et le bloc (SysMg) de gestion du système d'exploitation (OS) ;
- un bloc (WW) correspondant à une application conviviale permettant à l'utilisateur d'avoir une vision interne de la machine, couplé entre le système d'exploitation (OS) et interface administrateur Serveur (ASI) de la machine (PK) ;
- un bloc (ASRX) qui collecte et rapporte des informations sur l'activité du système d'exploitation (OS), couplé au système d'exploitation (OS) et au bloc (WW) correspondant à une application ;
- un bloc (SMIT) de gestion d'interface système, couplé au système d'exploitation (OS) de la machine et, d'autre part, au bloc de commandes (SM Commands) du module d'administration (SM) via un LAN ;
- un bloc (RTAS) couplé entre les moyens d'administration des modules (BUMP) et le système d'exploitation (OS), et servant d'interface programmable ; et
- un bloc (O/F) d'interface programmable, couplé sur la liaison reliant le démon (SMAD) et le système d'exploitation (OS).

7. Système selon l'une quelconque des revendications 1 à 6, caractérisé en ce la liaison spécifique supportant le protocole déterminé est une liaison alphanumérique.

8. Système selon l'une quelconque des revendications 1 à 7, caractérisé en ce que le lien physique est un lien TCP/IP.
